# EUROPEAN PATENT SPECIFICATION

(11) **EP 2 617 850 B1**
(45) Date of publication and mention of the grant of the patent: **09.11.2016**
(21) Application number: 11825305.3
(22) Date of filing: 15.09.2011
(51) Int. Cl.: C22C 38/00, C22C 38/02, C22C 38/04, C22C 38/06, C22C 38/14, C22C 38/12, C22C 38/08, C22C 38/18, C22C 38/58, C21D 6/00, C21D 8/02, C21D 9/46, B32B 15/01, B21B 3/00

(54) **HIGH-STRENGTH HOT ROLLED STEEL SHEET HAVING EXCELLENT TOUGHNESS AND METHOD FOR PRODUCING SAME**
HOCHFESTES HEISSGEWALZTES STAHLBLECH MIT HERVORRAGENDER BRUCHFESTIGKEIT UND HERSTELLUNGSVERFAHREN DAFÜR
TÔLE EN ACIER LAMINÉE À CHAUD À HAUTE RÉSISTANCE PRÉSENTANT UNE EXCELLENTE TÉNACITÉ ET SON PROCÉDÉ DE FABRICATION

(30) Priority: 17.09.2010 JP 2010209898
(43) Date of publication of application: 24.07.2013
(73) Proprietor: JFE Steel Corporation, Tokyo 100-0011 (JP)
(72) Inventor: SAITO, Hayato, Tokyo 100-0011 (JP); NAKAJIMA, Katsumi, Tokyo 100-0011 (JP); FUNAKAWA, Yoshimasa, Tokyo 100-0011 (JP); MORIYASU, Noriaki, Tokyo 100-0011 (JP); MURATA, Takayuki, Tokyo 100-0011 (JP)
(74) Representative: Hoffmann Eitle
(86) International application number: PCT/JP2011/071752
(87) International publication number: WO 2012/036307

(56) References cited:
- EP-A1- 1 865 083
- EP-A1- 2 053 139
- EP-A1- 2 116 624
- EP-A1- 2 184 373
- JP-A- 63 179 020
- JP-A- S55 119 152
- JP-A- 2000 109 951
- JP-A- 2002 080 936
- JP-A- 2003 239 036
- JP-A- 2004 244 651
- JP-A- 2005 350 691
- JP-A- 2009 280 900
- JP-A- 2010 196 164
- US-A1- 2008 223 491
- US-B1- 6 364 968

## Description

### [Technical Field]

The present invention relates to a high strength hot rolled steel sheet that exhibits a tensile strength of not less than 780 MPa and excellent toughness and is suitable for parts such as automobile structural parts and frames for trucks. The invention also relates to a method for manufacturing such steel sheets.

### [Background Art]

Improving the fuel efficiency of automobiles has recently become an important issue from the viewpoint of global environment conservation. In order to achieve compatibility between fuel efficiency and crash safety of automobiles, active efforts have been made to reduce the weight of car bodies themselves by increasing the strength of materials used and reducing the thickness of parts. While hot rolled steel sheets heretofore used for automobile parts have a grade in terms of tensile strength of 440 MPa or 590 MPa, there has recently been an increasing need for high strength hot rolled steel sheets having a grade of 780 MPa or higher.

However, increasing the strength of steel sheets is generally accompanied by a decrease in toughness. Thus, various studies have been carried out in order to improve toughness required for steel sheets to be used as automobile parts.

For example, patent document 1 describes a method for manufacturing high strength hot rolled steel sheets, which includes hot rolling a steel slab containing C : 0.05 to 0.15%, Si : not more than 1.50%, Mn : 0.5 to 2.5%, P : not more than 0.035%, S : not more than 0.01%, Al : 0.02 to 0.15% and Ti : 0.05 to 0.2% at a finishing temperature of not less than the Ar₃ transformation point, thereafter cooling the steel sheet to the temperature range of 400 to 550°C at a cooling rate of not less than 30°C/s followed by coiling, and cooling the coiled coil to not more than 300°C at a cooling rate of 50 to 400°C/h, thereby manufacturing a hot rolled steel sheet which includes a microstructure containing bainite at 60 to 95% by volume as well as ferrite or ferrite and martensite. According to the technique of patent document 1, quenching of the coiled coil suppresses the intergranular segregation of phosphorus and thereby lowers the fracture appearance transition temperature in an impact test, thus enabling the manufacturing of high strength hot rolled steel sheets with excellent hole expansion workability which exhibit a tensile strength of not less than 780 MPa and a hole expanding ratio of not less than 60% in the case of a sheet thickness of about 2.0 mm.

Patent document 2 discloses a hot rolled high strength steel sheet with excellent strength, ductility, toughness and fatigue property characteristics which has a composition including C : 0.01 to 0.20 weight%, Si : not more than 1.00 weight%, Mn : not more than 2.00 weight%, Al : not more than 0.10 weight%, N : not more than 0.0070 weight% and Nb : 0.0050 to 0.15 weight%, the balance excluding inevitable impurities being substantially represented by Fe, and which includes a mixed phase microstructure in which fine ferrite with an average grain diameter of 2 to 3 µm has an area fraction of not less than 70%, a phase including bainite and martensite has an area fraction of not more than 20%, and ferrite with an average grain diameter of not more than 10 µm represents the balance of the area ratio.

Patent document 3 describes a method for manufacturing high strength hot rolled steel sheets having a tensile strength of not less than 780 MPa, which includes hot rolling a steel slab containing C : 0.04 to 0.15%, Si : 0.05 to 1.5%, Mn : 0.5 to 2.0%, P : not more than 0.06%, S : not more than 0.005%, Al : not more than 0.10% and Ti : 0.05 to 0.20% at a finishing temperature of 800 to 1000°C, thereafter cooling the steel sheet at a cooling rate of not less than 55°C/s and subsequently at a cooling rate of not less than 120°C/s in the temperature range of 500°C and below so as to cool the steel sheet by nucleate boiling cooling, and coiling the steel sheet at 350 to 500°C.

According to the technique described in Patent document 3, a high strength hot rolled steel sheet with a tensile strength of not less than 780 MPa is obtained which has a microstructure including more than 95% of bainite and less than 5% of irreversibly-formed other phase or phases and exhibits excellent stretch flangeability after working as well as stably small variations in inner quality of the steel sheet.

### [Citation List]

### [Patent Document]

[Patent document 1] Japanese Unexamined Patent Application Publication No. 2006-274318
[Patent document 2] Japanese Unexamined Patent Application Publication No. 63-145745.
[Patent document 3] Japanese Unexamined Patent Application Publication No. 2009-280900

### [Summary of Invention]

### [Technical Problem]

The technique described in patent document 1 is, however, the reduction of phosphorus segregation to ferrite grain boundaries in order to lower the fracture appearance transition temperature in an impact test. Thus, the application of this technique is difficult when there is no or little ferrite.

In the technique described in patent document 2, the microstructure is configured to contain fine ferrite at not less than 70%, which allows for an increase in strength to 617 MPa. However, it is difficult to stably ensure a high strength of 780 MPa or above in terms of tensile strength by the technique. Thus, the technique has a problem in that the strength of steel sheets is insufficient.

Further, while the technique described in patent document 3 can ensure a high strength of not less than 780 MPa in terms of tensile strength, the steel sheet does not still have sufficient toughness required for automobile parts because controlling of the bainite phase is insufficient.

As described above, it has been difficult for conventional high strength hot rolled steel sheets with a tensile strength of not less than 780 MPa to achieve a fully satisfactory improvement in toughness.

The present invention solves the aforementioned problems in an advantageous manner. It is therefore an object of the invention to propose a high strength hot rolled steel sheet, as well as an advantageous method for manufacturing the same, which exhibits excellent toughness in spite of the tensile strength being increased to 780 MPa or above.

### [Solution to Problem]

The present inventors studied approaches to improve the toughness of high strength hot rolled steel sheets with a tensile strength (TS) of not less than 780 MPa and a sheet thickness of 4.0 to 12 mm. As a result, the present inventors have obtained the following finding.

It has been found that toughness is markedly increased while ensuring high strength in terms of TS of not less than 780 MPa by configuring the microstructure such that the main phase is fine bainite, in detail, the bainite fraction is in excess of 95% and the average grain diameter of the bainite phase is not more than 3 µm, as well as such that the hardness distribution across the sheet thickness direction is narrowed.

It is considered that this advantageous improvement in toughness is achieved because the configuration in which the microstructure contains fine bainite across the sheet thickness suppresses the development of cracks and also prevents the microstructure from becoming locally brittle due to the influences of decarburization at a surface and the influences of central segregation. The present inventors carried out further studies based on the above finding and have completed the present invention.

That is, configurations of the present invention are summarized as follows.
1. A high strength hot rolled steel sheet with excellent toughness, which consists of, in terms of mass%, C : 0.04 to 0.12%, Si : 0.5 to 1.2%, Mn : 1.0 to 1.8%, P : not more than 0.03%, S : not more than 0.0030%, Al : 0.005 to 0.20%, N : not more than 0.005% and Ti : 0.03 to 0.13%, optionally Ni: 0.01 to 0.50 and optionally one, or two or more selected from Nb : 0.005 to 0.10%, V : 0.002 to 0.50%, Mo : 0.02 to 0.50%, Cr : 0.03 to 0.50%, B : 0.0002 to 0.0050%, Cu : 0.01 to 0.50%, Ca : 0.0005 to 0.0050% and REM : 0.0005 to 0.0100% the balance being Fe and inevitable impurities, contains a bainite phase at an area fraction exceeding 95%, the bainite phase having an average grain diameter of not more than 3 µm, has a difference ΔHv1 of not more than 50 between a Vickers hardness value at 50 µm from the surface and a Vickers hardness value at 1/4 of a sheet thickness, has a difference ΔHv2 of not more than 40 between the Vickers hardness value at 1/4 of the sheet thickness and a Vickers hardness value at 1/2 of the sheet thickness, the sheet thickness being not less than 4.0 mm and not more than 12 mm, and has a tensile strength of not less than 780 MPa, wherein the difference ΔHv1 and ΔHv2 are in the direction of the sheet thickness.
2. The high strength hot rolled steel sheet with excellent toughness described in 1, wherein the steel sheet comprises, in terms of mass%, Ni : 0.01 to 0.50%.
3. The high strength hot rolled steel sheet with excellent toughness described in 2, wherein the steel sheet comprises, in terms of mass%, one, or two or more selected from Nb : 0.005 to 0.10%, V : 0.002 to 0.50%, Mo : 0.02 to 0.50%, Cr : 0.03 to 0.50%, B : 0.0002 to 0.0050%, Cu : 0.01 to 0.50%, Ca : 0.0005 to 0.0050% and REM : 0.0005 to 0.0100%.
4. A method for manufacturing the high strength hot rolled steel sheet as described in any of 1 to 3, comprising heating a steel material to a temperature of 1200 to 1350°C, the steel material having the chemical composition as described in any of 1 to 3, then hot finish rolling the steel material to a steel sheet under conditions in which the finishing temperature is Ar₃ to (Ar₃ + 80°C) and the draft in a non-recrystallization temperature range is not less than 40%, and cooling the hot rolled steel sheet to a coiling temperature of 300 to 500°C at an average cooling rate of not less than 25°C/s after completion of the hot rolling, wherein the non-recrystallization temperature range is a range of temperatures at which the rate of austenite recrystallization becomes less than 50%.

### [Advantageous Effects of Invention]

According to the present invention, hot rolled steel sheets with improved toughness can be obtained stably while ensuring a high strength of not less than 780 MPa in terms of tensile strength. Thus, the present invention is highly valuable in industry.

The use of the inventive high strength hot rolled steel sheets for automobile structural parts and frames for trucks ensures safety of automobiles and enables weight saving of car bodies, thereby reducing the load on the environment.

### [Description of Embodiments]

The present invention will be described in detail hereinbelow.

First, the reasons why the chemical composition of the inventive high strength hot rolled steel sheets is limited to the aforementioned ranges will be described. Hereinbelow, the term "%" indicating the contents of respective elements means "mass%" unless otherwise mentioned.

### C: 0.04 to 0.12%

Carbon is an effective element for increasing strength and promotes the formation of bainite. Carbon is also effective for increasing toughness because the addition of carbon lowers the bainite transformation point and refine the bainite microstructure. Thus, the C content in the invention is limited to be not less than 0.04%. On the other hand, any C content exceeding 0.12% causes an increase in the amount of coarse cementite, resulting in not only a decrease in toughness but also a deterioration in weldability, and thus the upper limit of C content is specified to be 0.12%. The C content is preferably in the range of not less than 0.05% and not more than 0.09%.

### Si: 0.5 to 1.2%

Silicon is an element that contributes to an increase in toughness by suppressing the formation of coarse cementite. In order to obtain this effect, silicon needs to be added at not less than 0.5%. On the other hand, any addition in excess of 1.2% results in a marked deterioration in surface quality of the steel sheets and leads to not only a decrease in toughness but also decreases in chemical conversion properties and corrosion resistance. Thus, the upper limit of the Si content is specified to be 1.2%. The Si content is preferably in the range of not less than 0.6% and not more than 1.0%.

### Mn: 1.0 to 1.8%

Manganese is an effective element for increasing strength and contributes to an increase in strength through solid solution hardening. In addition, this element contributes to an increase in toughness by improving hardenability and promoting the formation of bainite. In order to obtain these effects, manganese needs to be added at not less than 1.0%. On the other hand, any addition in excess of 1.8% results in marked central segregation and a consequent decrease in toughness. Thus, the Mn content is limited to be in the range of 1.0 to 1.8%. The Mn content is preferably in the range of not less than 1.2% and not more than 1.5%.

### P: not more than 0.03%

Phosphorus has an effect of increasing the strength of steel by solid solution. However, this element is segregated in grain boundaries, in particular prior austenite grain boundaries, thereby causing deteriorations in toughness and workability. Thus, it is preferable in the invention that the P content be reduced as much as possible. However, a P content of up to 0.03% is acceptable. The P content is preferably not more than 0.01%.

### S: not more than 0.0030%

Sulfur combines with titanium and manganese to form sulfides and lowers the toughness of steel sheets. Thus, it is desirable that the S content be reduced as much as possible. However, a S content of up to 0.0030% is acceptable. The S content is preferably not more than 0.002%, and more preferably not more than 0.001%.

### Al: 0.005 to 0.20%

Aluminum is an element that works as a deoxidizer for steel and is effective for increasing the cleanliness of steel. In order to obtain these effects, aluminum needs to be added at not less than 0.005%. On the other hand, any content in excess of 0.20% causes a marked increase in the amounts of oxide inclusions, resulting in not only a decrease in toughness but also the occurrence of surface defects on steel sheets. Thus, the Al content is limited to be in the range of 0.005 to 0.20%. The Al content is preferably in the range of 0.02 to 0.06%.

### N: not more than 0.005%

Nitrogen combines with nitride-forming elements such as titanium at a high temperature and is precipitated as nitrides. In particular, this element easily combines with titanium at a high temperature to form a coarse nitride, thereby lowering toughness. Thus, it is preferable in the invention that the N content be reduced as much as possible. Thus, the upper limit is specified to be 0.005%. The N content is preferably not more than 0.004%, and more preferably not more than 0.003%.

### Ti: 0.03 to 0.13%

Titanium contributes to an increase in toughness by contributing to reducing the size of austenite grains and thereby refining the microstructure of finally obtainable steel sheets. In order to obtain these effects, the Ti content needs to be not less than 0.03%. On the other hand, any excessive content exceeding 0.13% causes an increase in the amounts of coarse precipitates and a consequent decrease in toughness. Thus, the Ti content is limited to be in the range of 0.03 to 0.13%. The Ti content is preferably in the range of 0.05 to 0.11%.

The components described above are basic components. In addition to these components, the inventive steel sheet may contain nickel as an element for improving toughness and strength.

### Ni: 0.01 to 0.50%

Nickel not only increases toughness but also contributes to an increase in strength by improving hardenability and thereby facilitating the formation of a bainite phase. In order to obtain these effects, nickel needs to be added at not less than 0.01%. If the Ni content exceeds 0.50%, however, a martensite phase is easily formed to lower toughness and workability. Thus, when nickel is contained, the Ni content is controlled to be in the range of 0.01 to 0.50%.

In the present invention, the steel sheet may further contain one, or two or more selected from Nb, V, Mo, Cr, B, Cu, Ca and REM in the ranges of contents described below.

### Nb: 0.005 to 0.10%

Niobium contributes to increasing toughness and strength by improving hardenability and thereby facilitating the formation of a bainite phase. In addition, this element contributes to an increase in toughness by contributing to reducing the size of austenite grains and thereby refining the microstructure of finally obtainable steel sheets. In order to obtain these effects, the Nb content needs to be not less than 0.005%. If the Nb content exceeds 0.10%, however, the formation of coarse precipitates is facilitated with the result that toughness and workability are lowered. Thus, when niobium is contained, the Nb content is controlled to be in the range of 0.005 to 0.10%.

### V: 0.002 to 0.50%

Vanadium facilitates the formation of a bainite phase through an improvement in hardenability, thereby contributing to increasing toughness and strength. In order to obtain these effects, the V content needs to be not less than 0.002%. However, any excessive content exceeding 0.50% leads to an increase in the amounts of coarse precipitates and consequent decreases in toughness and workability. Thus, when vanadium is contained, the V content is controlled to be in the range of 0.002 to 0.50%. The V content is preferably in the range of 0.05 to 0.40%.

### Mo: 0.02 to 0.50%

Molybdenum contributes to increasing toughness and strength by improving hardenability and thereby facilitating the formation of a bainite phase. In order to obtain these effects, the Mo content needs to be not less than 0.02%. If the Mo content exceeds 0.50%, however, the formation of a martensite phase is facilitated with the result that toughness and workability are lowered. Thus, when molybdenum is contained, the Mo content is controlled to be in the range of 0.02 to 0.50%.

### Cr: 0.03 to 0.50%

Chromium facilitates the formation of a bainite phase through an improvement in hardenability, thereby contributing to increasing toughness and strength. In order to obtain these effects, the Cr content needs to be not less than 0.03%. If the Cr content exceeds 0.50%, however, the formation of a martensite phase is facilitated with the result that toughness and workability are lowered. Thus, when chromium is contained, the Cr content is controlled to be in the range of 0.03 to 0.50%.

### B: 0.0002 to 0.0050%

Boron suppresses the formation and growth of ferrite originating at austenite grain boundaries and facilitates the formation of a bainite phase through an improvement of hardenability, thereby contributing to increasing toughness and strength. These effects are obtained by adding boron at not less than 0.0002%. However, adding boron in excess of 0.0050% results in a decrease in workability. Thus, when boron is contained, the B content is controlled to be in the range of 0.0002 to 0.0050%.

### Cu: 0.01 to 0.50%

Copper increases the strength of steel by functioning as a solid solution element and facilitates the formation of a bainite phase through an improvement of hardenability, thereby contributing to increasing strength and toughness. In order to obtain these effects, copper needs to be added at not less than 0.01%. However, any Cu content exceeding 0.50% leads to a decrease in surface quality. Thus, when copper is added, the Cu content is controlled to be in the range of 0.01 to 0.50%.

### Ca: 0.0005 to 0.0050%

Calcium is an element that effectively remedies adverse effects of sulfides on toughness by controlling the shape of sulfides to spherical. This effect can be obtained by adding calcium at not less than 0.0005%. However, any Ca content in excess of 0.0050% leads to an increase in the amounts of inclusions and the like and causes not only a decrease in toughness but also the occurrence of surface defects and internal defects. Thus, when calcium is added, the Ca content is controlled to be in the range of 0.0005 to 0.0050%.

### REM: 0.0005 to 0.0100%

Similarly to calcium, rare earth metals (REM) are elements that effectively remedy adverse effects of sulfides on toughness by controlling the shape of sulfides to spherical. This effect can be obtained by containing a rare earth metal at not less than 0.0005%. However, any REM content in excess of 0.0100% leads to an increase in the amounts of inclusions and the like and causes not only a decrease in toughness but also increase in the probability of frequent occurrence of surface defects and internal defects. Thus, when REM is contained, the REM content is controlled to be in the range of 0.0005 to 0.0100%.

The balance after the deduction of the aforementioned elements is represented by Fe and inevitable impurities.

Next, the microstructure of the inventive high strength steel sheets will be described.

In the present invention, it is necessary that the microstructure of the steel sheets contain a fine bainite phase as a main phase at an area fraction exceeding 95% relative to the entirety of the microstructure and with an average grain diameter of the bainite phase of not more than 3 µm. This configuration ensures that the hot rolled steel sheet exhibits a high strength of not less than 780 MPa in terms of tensile strength as well as excellent toughness. If the bainite phase has an area fraction of 95% or less or has an average grain diameter in excess of 3 µm, such a steel sheet cannot satisfy both a high strength of not less than 780 MPa in terms of tensile strength and excellent toughness. The microstructure preferably contains the bainite phase at not less than 98% and is more preferably a bainite single phase. The finer the grain diameter of the bainite phase is, the larger the effect in the improvement of toughness is. From this point of view, the average grain diameter is preferably not more than 2 µm.

Besides the main phase, the microstructure can possibly contain a second phase including ferrite, martensite, pearlite, retained austenite, cementite and the like. However, the presence of such microstructures is not problematic as long as the total amount is not more than 5%. However, an increase in the average grain diameter of the second phase raises the probability of occurrence of cracks originating at an interface between the main phase and the second phase, resulting in a decrease in toughness. Thus, it is preferable that the average grain diameter of the second phase be not more than 3 µm, and more preferably not more than 2 µm.

Hardness difference in direction of sheet thickness Difference in Vickers hardness between at 50 µm from surface and at 1/4 of sheet thickness, ΔHv1, ≤ 50' Difference in Vickers hardness between at 1/4 of sheet thickness and at 1/2 of sheet thickness, ΔHv2, ≤ 40

Cracks occur and develop at the weakest portions of a material. Thus, a high strength hot rolled steel sheet with a relatively large sheet thickness, in particular a sheet thickness of not less than 4.0 mm and not more than 12 mm as specified in the present invention, can be effectively suppressed from the occurrence and development of cracks and can achieve improved toughness by making the quality of a material uniform, namely, by reducing the difference in hardness in a sheet thickness direction. While a surface usually tends to become mild by decarburization, toughness is lowered if the steel is excessively decarburized. It is therefore necessary to make sure that the difference in hardness between a surface portion and an inner portion along the sheet thickness does not exceed a certain level. In detail, it is necessary that the difference ΔHv1 in Vickers hardness between at 50 µm from the surface and at 1/4 of a sheet thickness be not more than 50 points, and more preferably not more than 30 points. Central segregation which occurs during casting increases hardness at 1/2 of the sheet thickness, and if the difference in hardness from a surrounding portion becomes large as a result of this hardening, toughness is lowered. It is therefore necessary to make sure that the difference in hardness does not exceed a certain level. In detail, it is necessary that the difference AHv2 in Vickers hardness between at 1/4 of the sheet thickness and at 1/2 of the sheet thickness be not more than 40 points, and preferably not more than 25 points.

Next, the method for manufacturing high_strength_hot rolled steel sheets according to the present invention will be described.

Steel material may be manufactured by any method without limitation. Any common method may be adopted in which a molten steel having the above composition is produced by melting in a furnace such as a converter or an electric furnace, preferably subjected to secondary refining in a vacuum degassing furnace, and cast into a steel material such as a slab by continuous casting or the like.

### Heating temperature for steel material: 1200 to 1350°C

In a steel material such as a slab, carbonitride-forming elements such as titanium are present mostly as coarse carbonitrides. Coarse precipitates lower toughness and therefore must be once dissolved prior to hot rolling. For this purpose, it is necessary to heat the steel material to a temperature of not less than 1200°C. On the other hand, heating in excess of 1350°C generates a large amount of scales. As a result, the surface quality is deteriorated by, for example, scale marks. Thus, the heating temperature for the steel material is limited to be in the range of 1200 to 1350°C. The heating temperature is preferably in the range of 1230 to 1300°C. From the viewpoint of solid solution of carbonitrides, the holding time in the temperature range of 1200°C and above is preferably not less than 1800 seconds.

### Finishing temperature: Ar₃ to (Ar₃ + 80°C), draft in non-recrystallization temperature range: ≥ 40%

In order to make sure that the microstructure contains fine bainite throughout the sheet thickness, it is necessary that the hot finishing temperature be controlled to be a low temperature so as to accumulate strains in austenite and to increase bainite formation sites, and thereafter the steel sheet be cooled to a predetermined coiling temperature at a cooling rate described later. That is, it is important to control hot rolling conditions such that the finishing temperature is not more than (Ar₃ + 80°C) and the draft in a non-recrystallization temperature range is not less than 40%. Such conditions ensure that fine bainite with an average grain diameter of not more than 3 µm is obtained. If the finishing rolling temperature is less than Ar₃, rolling takes place while the temperature is in a two-phase region, namely, ferrite + austenite region. As a result, worked microstructures remain after the rolling to cause decreases in toughness and workability. Thus, the finishing temperature is limited to be in the range of Ar₃ to (Ar₃ + 80°C). If the draft in a non-recrystallization temperature range is below 40%, sufficient refining of bainite becomes difficult. Thus, the draft in a non-recrystallization temperature range is limited to be not less than 40%.

The size of the bainite phase is reduced more effectively as the temperature is lower and the draft is larger. Thus, it is preferable that the finishing temperature is not more than (Ar₃ + 50°C) and the draft in a non-recrystallization temperature range is not less than 50%.

The non-recrystallization temperature range used herein may be determined by, for example, in the following manner. Small pieces are cut out from a slab and are hot rolled in a laboratory at various temperatures. The hot rolled steel sheets are cooled with water immediately after being rolled. Samples for microstructure observation are cut out from the water-cooled hot rolled steel sheets, and are specularly polished and etched with 3% Nital to expose the microstructure. The ratio of austenite recrystallization is examined by image analysis to determine the range of temperatures at which the rate of austenite recrystallization becomes less than 50%. It can be said that any range of temperatures falling in this temperature range is the non-recrystallization temperature range.

### Rate of cooling from finishing temperature to coiling temperature: not less than 25°C/s

In order to make sure that the microstructure is formed of fine bainite, it is necessary that the steel sheet which has been hot rolled under the aforementioned conditions be cooled to a predetermined coiling temperature by quenching. If the rate of cooling to the coiling temperature is less than 25°C/s, the formation of ferrite progresses to a marked extent and pearlite is formed during cooling with the result that desired strength and toughness cannot be obtained. Thus, the rate of cooling from the finishing temperature to the coiling temperature is limited to be not less than 25°C/s.

### Coiling temperature: 300 to 500°C

If the coiling temperature is less than 300°C, martensite and retained austenite that are very hard are formed in such large amounts in the steel that toughness is lowered. Thus, the lower limit of the coiling temperature is specified to be 300°C. The coiling temperature is preferably not less than 350°C. On the other hand, coiling at above 500°C facilitates the occurrence of decarburization after the coiling, and causes a decrease in toughness not only due to decrease in hardness, but also due to the formation of oxides at grain boundaries in a surface microstructure. Thus, the coiling temperature is limited to be not more than 500°C. Because the formation of fine bainite phase is facilitated as the temperature becomes lower, the coiling temperature is preferably not more than 460°C.

After being coiled, the hot rolled sheet may be temper rolled by a common method, or may be pickled to remove scales. Further, the steel sheet may be subjected to a plating treatment such as hot dip galvanization and electrogalvanization or a chemical conversion treatment.

### [EXAMPLES]

Steels which had a composition described in Table 1 were produced by melting in a converter furnace and were cast into slabs (steel materials) by continuous casting. These steels were subjected to heating, hot rolling, cooling and coiling under conditions described in Table 2, thereby forming hot rolled steel sheets.

Here, the Ar₃ point was determined as follows. A small piece was cut out from the slab and was rolled in a laboratory under the same conditions as the heating conditions and the hot rolling conditions described in Table 2. After being rolled, the steel sheet was air cooled. The temperature of the steel sheet was measured during the air cooling. The obtained cooling curve was analyzed to determine the Ar₃ point.

In order to determine the draft in a non-recrystallization temperature range, rolling was conducted in a laboratory under the heating conditions described in Table 2 to obtain the non-recrystallization temperature range in accordance with the aforementioned method, and the draft in a non-recrystallization temperature range was determined by the total draft in the non-recrystallization temperature range.

Test pieces were sampled from the obtained hot rolled steel sheets. The microstructure fractions, the grain diameter, the hardness and the difference in hardness were measured by the following methods. Further, a tensile test was carried out to determine the yield point (YP), the tensile strength (TS) and the elongation (EL). Furthermore, a Charpy test was performed to determine the fracture appearance transition temperature (vTrs), based on which toughness was evaluated.

### • Microstructure fractions

To determine the microstructure fractions, a cross section along the sheet thickness that was parallel to the rolling direction was etched with a 3% Nital solution to expose the microstructure, and three fields of view were captured at 3000x magnification using a scanning electron microscope (SEM) with respect to a portion found at 1/4 of the sheet thickness. The area fraction of each phase was quantitatively determined by image processing.

### • Grain diameter of each phase

The 3000x SEM picture used in the determination of the microstructure fractions was processed such that two straight lines were drawn orthogonally to each other with an angle of 45° relative to the sheet thickness direction and with a length of 80 mm. The length of each segment of the straight lines that intersected with an individual grain of a bainite phase was measured. The average value of the obtained segment lengths was determined as an average grain diameter of the bainite phase.

### • Tensile test

A JIS No. 5 test piece (GL: 50 mm) was sampled such that the tensile direction would be perpendicular to the rolling direction. A tensile test was carried out by a method in accordance with JIS Z 2241 to determine the yield point (YP), the tensile strength (TS) and the elongation (EL).

### • Hardness

A cross section along the sheet thickness that was parallel to the rolling direction was specularly polished and was thereafter tested with a micro-Vickers tester. The load was 0.98 N (100 gf) for a portion found at 50 µm from the surface and was 4.9 N (500 gf) for portions at 1/4 and 1/2 of the sheet thickness. The hardness of each portion was measured with respect to five points. Of the five values, the three values excluding the maximum and minimum values were averaged to give the hardness of each portion. ΔHv1 and ΔHv2 were then determined wherein the former was the difference in hardness between at 1/4 of the sheet thickness and at 50 µm from the surface, and the latter was the difference in hardness between at 1/2 of the sheet thickness and at 1/4 of the sheet thickness.

### • Charpy test

A subsize test piece 55 mm in length, 10 mm in height and 5 mm in width was sampled from the obtained hot rolled sheet such that the longitudinal direction of the test piece would be perpendicular to the rolling direction. A V-shaped notch with a depth of 2 mm was formed in the middle of the test piece. The test piece was subjected to a Charpy test in accordance with JIS Z 2242 to determine the fracture appearance transition temperature (vTrs), based on which toughness was evaluated. For hot rolled sheets that had a sheet thickness exceeding 5 mm, samples were fabricated by grinding both sides to adjust the sheet thickness to 5 mm. For hot rolled sheets that had a sheet thickness of less than 5 mm, samples were fabricated with the original thickness and were subjected to the Charpy test. It can be said that steels with a vTrs value of -50°C or below are excellent in toughness.

The obtained results are described in Table 3.

[Table 1]

**Table 1**

| Steel code | Chemical composition (mass%) | | | | | | | | | Ar₃ point (°C) | Remarks |
|---|---|---|---|---|---|---|---|---|---|---|---|
| | C | Si | Mn | P | S | Al | N | Ti | Others | | |
| A | 0.08 | 0.75 | 1.65 | 0.01 | 0.0007 | 0.03 | 0.003 | 0.09 | - | 806 | Appropriate steel |
| B | 0.07 | 0.65 | 1.6 | 0.01 | 0.0007 | 0.02 | 0.003 | 0.10 | Ni:0.05 | 801 | Appropriate steel |
| C | 0.09 | 0.70 | 1.4 | 0.01 | 0.0020 | 0.03 | 0.004 | 0.09 | V:0.05 | 805 | Appropriate steel |
| D | 0.09 | 0.75 | 1.2 | 0.01 | 0.0010 | 0.03 | 0.003 | 0.06 | Nb:0.02 | 805 | Appropriate steel |
| E | 0.08 | 0.80 | 1.4 | 0.01 | 0.0010 | 0.03 | 0.003 | 0.08 | Cr:0.2 | 803 | Appropriate steel |
| F | 0.09 | 0.55 | 1.8 | 0.01 | 0.0010 | 0.03 | 0.002 | 0.085 | B:0.0012 | 795 | Appropriate steel |
| G | 0.07 | 0.60 | 1.6 | 0.01 | 0.0010 | 0.03 | 0.002 | 0.08 | Mo:0.15 | 789 | Appropriate steel |
| H | 0.05 | 1.00 | 2.0 | 0.01 | 0.0010 | 0.03 | 0.004 | 0.105 | Ca:0.0005 | 823 | Comp. steel |
| I | 0.09 | 0.60 | 1.8 | 0.01 | 0.0020 | 0.03 | 0.004 | 0.12 | REM:0.0010 | 793 | Appropriate steel |
| J | 0.02 | 0.60 | 1.0 | 0.01 | 0.0030 | 0.03 | 0.004 | 0.03 | - | 839 | Comp. steel |
| K | 0.08 | 0.70 | 2.5 | 0.01 | 0.0090 | 0.03 | 0.004 | 0.06 | - | 786 | Comp. steel |
| L | 0.06 | 0.80 | 0.7 | 0.01 | 0.0040 | 0.03 | 0.004 | 0.20 | - | 839 | Comp. steel |
| M | 0.08 | 0.90 | 1.5 | 0.01 | 0.0010 | 0.03 | 0.003 | 0.10 | B:0.001, Ni:0.05, V:0.1 | 761 | Comp. steel |
| N | 0.09 | 0.80 | 1.5 | 0.01 | 0.0010 | 0.03 | 0.003 | 0.10 | Ni:0.1, Cr:0.3, V:0.15 | 798 | Comp. steel |

[Table 2]

**Table 2**

| Steel sheet code | Steel code | Heating temp. (°C) | Finishing temp. (°C) | Draft in non-recrystallization temperature range (%) | Cooling rate (°C/s) | Coiling temp. (°C) | Sheet thickness (mm) | Remarks |
|---|---|---|---|---|---|---|---|---|
| A1 | A | 1260 | 855 | 50 | 33 | 430 | 6.0 | INV. EX. |
| A2 | A | 1280 | 860 | 52 | 30 | 430 | 4.0 | INV. EX. |
| A3 | A | 1260 | 870 | 50 | 33 | 600 | 6.0 | COMP. EX. |
| A4 | A | 1260 | 850 | 50 | 33 | 250 | 6.0 | COMP. EX. |
| A5 | A | 1260 | 960 | 50 | 35 | 470 | 6.0 | COMP. EX |
| A6 | A | 1260 | 870 | 30 | 20 | 470 | 6.0 | COMP. EX. |
| B1 | B | 1260 | 860 | 50 | 30 | 430 | 5.5 | INV. EX. |
| C1 | C | 1260 | 860 | 50 | 35 | 430 | 5.5 | INV. EX. |
| D1 | D | 1260 | 860 | 50 | 35 | 430 | 8.0 | INV. EX. |
| E1 | E | 1230 | 850 | 50 | 35 | 430 | 6.0 | INV. EX. |
| F1 | F | 1260 | 840 | 50 | 35 | 430 | 7.0 | INV. EX. |
| G1 | G | 1260 | 860 | 50 | 35 | 430 | 6.0 | INV. EX. |
| H1 | H | 1290 | 870 | 50 | 35 | 430 | 6.0 | COMP. EX. |
| 11 | I | 1260 | 865 | 50 | 35 | 430 | 6.0 | INV. EX. |
| J1 | J | 1260 | 870 | 50 | 35 | 430 | 6.0 | COMP. EX. |
| K1 | K | 1260 | 850 | 50 | 35 | 430 | 8.0 | COMP. EX. |
| L1 | L | 1260 | 870 | 50 | 35 | 430 | 6.0 | COMP. EX. |
| M1 | M | 1260 | 840 | 80 | 35 | 400 | 4.5 | INV. EX. |
| N1 | N | 1260 | 850 | 80 | 35 | 380 | 6.0 | INV. EX. |

[Table 3]

**Table 3**

| Steel sheet code | Steel code | Sheet thickness (mm) | YP (MPa) | TS (MPa) | El (%) | Bainite fraction (%) | Bainite grain diameter (µm) | ΔHv1 | ΔHv2 | vTrs (°C) | Remarks |
|---|---|---|---|---|---|---|---|---|---|---|---|
| A1 | A | 6.0 | 720 | 818 | 24 | 100 | 1.8 | 28 | 15 | -60 | INV. EX. |
| A2 | A | 4.0 | 710 | 812 | 22 | 98 | 2.5 | 30 | 16 | -70 | INV. EX. |
| A3 | A | 6.0 | 645 | 760 | 18 | 73 | 6.1 | 60 | 45 | -30 | COMP. EX. |
| A4 | A | 6.0 | 742 | 930 | 14 | 85 | 2.1 | 56 | 30 | -20 | COMP. EX. |
| A5 | A | 6.0 | 670 | 770 | 16 | 88 | 5.6 | 60 | 48 | -35 | COMP. EX. |
| A6 | A | 6.0 | 606 | 730 | 18 | 65 | 4.6 | 55 | 46 | -30 | COMP. EX. |
| B1 | B | 5.5 | 750 | 820 | 25 | 100 | 2.2 | 26 | 23 | -70 | INV. EX. |
| C1 | C | 5.5 | 740 | 840 | 24 | 100 | 1.9 | 25 | 20 | -70 | INV. EX. |
| D1 | D | 8.0 | 705 | 782 | 26 | 100 | 2.7 | 28 | 15 | -60 | INV. EX. |
| E1 | E | 6.0 | 752 | 835 | 22 | 100 | 2.3 | 25 | 26 | -70 | INV. EX. |
| F1 | F | 7.0 | 760 | 846 | 20 | 100 | 2.2 | 30 | 20 | -70 | INV. EX. |
| G1 | G | 6.0 | 780 | 870 | 19 | 100 | 1.9 | 26 | 22 | -60 | INV. EX. |
| H1 | H | 6.0 | 722 | 840 | 20 | 98 | 2.4 | 42 | 30 | -60 | COMP. EX. |
| 11 | I | 6.0 | 740 | 825 | 23 | 100 | 2.6 | 30 | 16 | -65 | INV. EX. |
| J1 | J | 6.0 | 520 | 580 | 20 | 30 | 5.7 | 40 | 30 | -40 | COMP. EX. |
| K1 | K | 8.0 | 720 | 830 | 16 | 85 | 2.4 | 66 | 45 | -30 | COMP. EX. |
| L1 | L | 6.0 | 580 | 790 | 13 | 52 | 6.3 | 60 | 35 | -20 | COMP. EX. |
| M1 | M | 4.5 | 887 | 1020 | 16 | 100 | 1.4 | 26 | 19 | -60 | INV. EX. |
| N1 | N | 6.0 | 921 | 1045 | 16 | 100 | 1.1 | 25 | 24 | -60 | INV. EX. |

As shown in Table 3, all of the steel sheets in INVENTIVE EXAMPLES exhibited excellent strength and toughness, with a tensile strength (TS) of not less than 780 MPa and a fracture appearance transition temperature (vTrs) of not more than -50°C. In contrast, the steel sheets in COMPARATIVE EXAMPLES were unsatisfactory in at least one of TS and vTrs.

## Claims

1. A high strength hot rolled steel sheet with excellent toughness, which consists of, in terms of mass%, C: 0.04 to 0.12%, Si: 0.5 to 1.2%, Mn: 1.0 to 1.8%, P: not more than 0.03%, S: not more than 0.0030%, A1: 0.005 to 0.20%, N: not more than 0.005% and Ti: 0.03 to 0.13%, optionally Ni: 0.01 to 0.50%, and optionally one, or two or more selected from Nb: 0.005 to 0.10%, V: 0.002 to 0.50%, Mo: 0.02 to 0.50%, Cr: 0.03 to 0.50%, B: 0.0002 to 0.0050%, Cu: 0.01 to 0.50%, Ca: 0.0005 to 0.0050% and REM: 0.0005 to 0.0100%, and the balance being Fe and inevitable impurities, contains a bainite phase at an area fraction exceeding 95%, the bainite phase having an average grain diameter of not more than 3 µm, has a difference ΔHv1 of not more than 50 between a Vickers hardness value at 50 µm from the surface and a Vickers hardness value at 1/4 of a sheet thickness, has a difference ΔHv2 of not more than 40 between the Vickers hardness value at 1/4 of the sheet thickness and a Vickers hardness value at 1/2 of the sheet thickness, the sheet thickness being not less than 4.0 mm and not more than 12 mm, and has a tensile strength of not less than 780 MPa, wherein the differences ΔHv1 and ΔHv2 are in the direction of the sheet thickness.

2. The high strength hot rolled steel sheet with excellent toughness according to Claim 1, wherein the steel sheet comprises, in terms of mass%, Ni: 0.01 to 0.50%.

3. The high strength hot rolled steel sheet with excellent toughness according to Claim 2, wherein the steel sheet comprises, in terms of mass%, one, or two or more selected from Nb: 0.005 to 0.10%, V: 0.002 to 0.50%, Mo: 0.02 to 0.50%, Cr: 0.03 to 0.50%, B: 0.0002 to 0.0050%, Cu: 0.01 to 0.50%, Ca: 0.0005 to 0.0050% and REM: 0.0005 to 0.0100%.

4. A method for manufacturing the high strength hot rolled steel sheet as described in any one of Claims 1 to 3, comprising heating a steel material to a temperature of 1200 to 1350°C, the steel material having the chemical composition as described in any of Claims 1 to 3, then hot finish rolling the steel material to a steel sheet under conditions in which the finishing temperature is Ar₃ to (Ar₃ + 80°C) and the draft in a non-recrystallization temperature range is not less than 40%, and cooling the hot rolled steel sheet to a coiling temperature of 300 to 500°C at an average cooling rate of not less than 25°C/s after completion of the hot rolling, wherein the non-recrystallization temperature range is a range of temperatures at which the rate of austenite recrystallization becomes less than 50%.

## Patentansprüche

1. Hochfestes warmgewalztes Stahlblech mit exzellenter Zähigkeit, das, in Bezug auf Massen%, aus C: 0,04 bis 0,12%, Si: 0,5 bis 1,2%, Mn: 1,0 bis 1,8%, P: nicht mehr als 0,03%, S: nicht mehr als 0,0030%, Al: 0,005 bis 0,20%, N: nicht mehr als 0,005% und Ti: 0,03 bis 0,13%, optional Ni: 0,01 bis 0,50%, und optional eines oder zwei oder mehrere ausgewählt aus Nb: 0,005 bis 0,10%, V: 0,002 bis 0,50%, Mo: 0,02 bis 0,50%, Cr: 0,03 bis 0,50%, B: 0,0002 bis 0,0050%, Cu: 0,01 bis 0,50%, Ca: 0,0005 bis 0,0050% und REM: 0,0005 bis 0,0100% und als Rest aus Fe und unvermeidlichen Verunreinigungen besteht, das eine Bainitphase zu einem Flächenanteil, der 95% übersteigt, enthält, wobei die Bainitphase einen durchschnittlichen Korndürchmesser von nicht mehr als 3 µm aufweist, das eine Differenz ΔHv1 von nicht mehr als 50 zwischen einem Vickershärtewert bei 50 µm von der Oberfläche und einem Vickershärtewert bei 1/4 der Blechdicke aufweist, das eine Differenz ΔHv2 von nicht mehr als 40 zwischen dem Vickershärtewert bei 1/4 der Blechdicke und einem Vickershärtewert bei 1/2 der Blechdicke aufweist, wobei die Blechdicke nicht weniger als 4,0 mm und nicht mehr als 12 mm beträgt, und das eine Zugfestigkeit von nicht weniger als 780 MPa aufweist, wobei die Differenzen ΔHv1 und ΔHv2 in der Richtung der Blechdicke vorliegen.

2. Hochfestes warmgewalztes Stahlblech mit exzellenter Zähigkeit gemäß Anspruch 1, wobei das Stahlblech, in Bezug auf Massen%, Ni: 0,01 bis 0,50% aufweist.

3. Hochfestes warmgewalztes Stahlblech mit exzellenter Zähigkeit gemäß Anspruch 2, wobei das Stahlblech, in Bezug auf Massen%, eines oder zwei oder mehrere ausgewählt aus Nb: 0,005 bis 0,10%, V: 0,002 bis 0,50%, Mo: 0,02 bis 0,50%, Cr: 0,03 bis 0,50%, B: 0,0002 bis 0,0050%, Cu: 0,01 bis 0,50%, Ca: 0,0005 bis 0,0050% und REM: 0,0005 bis 0,0100% aufweist.

4. Verfahren zur Herstellung des in einem der Ansprüche 1 bis 3 beschriebenen hochfesten warmgewalzten Stahlblechs, umfassend das Aufheizen eines Stahlwerkstoffs auf eine Temperatur von 1200 bis 1350°C, wobei der Stahlwerkstoff die in einem der Ansprüche 1 bis 3 beschriebene chemische Zusammensetzung aufweist, nachfolgend Endwarmwalzen des Stahlwerkstoffs zu einem Stahlblech unter Bedingungen, in welchen die Endtemperatur Ar3 bis (Ar3 + 80°C) beträgt und die Walzreduktion in einem Nicht-Rekristallisationstemperaturbereich nicht weniger als 40% beträgt, und Abkühlen des warmgewalzten Stahlblechs auf eine Haspeltemperatur von 300 bis 500°C bei einer durchschnittlichen Abkühlgeschwindigkeit von nicht weniger als 25°C/s nach dem Abschluss des Warmwalzens, wobei der Nicht-Rekristallisationstemperaturbereich einen Bereich von Temperaturen darstellt, bei dem die Austenit-Rekristallisationsrate weniger als 50% beträgt.

## Revendications

1. Tôle d'acier laminée à chaud haute résistance avec une excellente ténacité, qui consiste en, en termes de % de masse, C : 0,04 à 0,12 %, Si : 0,5 à 1,2 %, Mn : 1,0 à 1,8 %, P : pas plus de 0,03 %, S : pas plus de 0,003 %, Al : 0 ;005 à 0,20 %, N : pas plus de 0,005 % et Ti : 0,03 à 0,13 %, facultativement Ni: 0,01 à 0,5 %, et facultativement un, ou deux ou plus sélectionnés parmi Nb : 0,005 à 0,1 %, V : 0,002 à 0,5 %, Mo : 0,02 à 0,5 %, Cr : 0,03 à 0,5 %, B : 0,0002 à 0,005 %, Cu : 0,01 à 0,5 %, Ca : 0,0005 à 0,005 % et REM : 0,0005 à 0,01 %, et le reste étant du Fe et des impuretés inévitables, contient une phase de bainite à une fraction de surface dépassant 95 %, la phase de bainite ayant un diamètre de grain moyen de pas plus de 3 µm, a une différence ΔHv1 de pas plus de 50 entre une valeur de dureté Vickers à 50 µm de la surface et une valeur de dureté Vickers à ¼ d'une épaisseur de tôle, a une différence ΔHv2 de pas plus de 40 entre la valeur de dureté Vickers à ¼ de l'épaisseur de tôle et une valeur de dureté Vickers à ½ de l'épaisseur de tôle, l'épaisseur de tôle n'étant pas moins que 4 mm et pas plus que 12 mm, et a une résistance à la traction de pas moins de 780 MPa, dans laquelle les différences ΔHv1 et ΔHv2 sont dans la direction de l'épaisseur de tôle.

2. Tôle d'acier laminée à chaud haute résistance avec une excellente ténacité selon la revendication 1, dans laquelle la tôle d'acier comprend, en termes de % de masse, Ni : 0,01 à 0,5 %.

3. Tôle d'acier laminée à chaud haute résistance avec une excellente ténacité selon la revendication 2, dans laquelle la tôle d'acier comprend, en termes de % de masse, un, ou deux ou plus sélectionnés parmi Nb : 0,005 à 0,1 %, V : 0,002 à 0,5 %, Mo : 0,02 à 0,5 %, Cr : 0,03 à 0,5 %, B : 0,0002 à 0,005 %, Cu : 0,01 à 0,5 %, Ca : 0,0005 à 0,005 % et REM : 0,0005 à 0,01 %.

4. Procédé de fabrication de la tôle d'acier laminée à chaud haute résistance avec une excellente ténacité telle que décrite dans l'une quelconque des revendications 1 à 3, comprenant un chauffage d'un matériau d'acier à une température de 1200 à 1350°C, le matériau d'acier ayant la composition chimique telle que décrite dans l'une quelconque des revendications 1 à 3, puis un laminage de finition à chaud du matériau d'acier en une tôle d'acier sous des conditions dans lesquelles la température de finition est de Ar₃ à (Ar₃ + 80°C) et l'étirage dans une plage de température de non-recristallisation n'est pas moins de 40 %, et un refroidissement de la tôle d'acier laminée à chaud jusqu'à une température d'enroulement de 300 à 500°C à un taux de refroidissement moyen de pas moins de 25°C/s après l'achèvement du laminage à chaud, dans lequel la plage de température de non-recristallisation est une plage de température pour laquelle le taux de recristallisation d'austénite devient moins de 50 %.
